# EUROPEAN PATENT APPLICATION

(11) **EP 1 466 873 A2**
(43) Date of publication of application: **13.10.2004**
(21) Application number: 04090123.3
(22) Date of filing: 31.03.2004
(51) Int. Cl.: C03B 37/014, G02B 6/16

(54) **Glass preform for an optical fiber and manufacturing method thereof**

(30) Priority: 08.04.2003 JP 2003104133
(71) Applicant: SHIN-ETSU CHEMICAL CO., LTD., Chiyoda-ku, Tokyo (JP)
(72) Inventor: Otosaka, Tetsuya, Annaka-shi Gunma-ken (JP); Inoue, Dai, Annaka-shi Gunma-ken (JP); Oyamada, Hiroshi, Annaka-shi Gunma-ken (JP); Hirasawa, Hideo, Annaka-shi Gunma-ken (JP)
(74) Representative: Pfenning, Meinig & Partner

(57) **Abstract**

A method for manufacturing a glass base material for an optical fiber by forming a core rod having a core section and a portion of a clad, forming an additional clad by depositing glass particles on circumference of the core rod, and performing a sintering and vitrifying process on an obtained porous base material, includes the step of forming the core rod in order that the relation 3.75≤a/m≤6 is satisfied, where 'a' denotes an outer diameter of a section corresponding to the core rod, and 'm' denotes a mode field diameter at 1385nm in wavelength with regard to the optical fiber obtained by drawing the glass base material.

## Description

### BACKGROUND OF THE INVENTION

The present invention relates to manufacturing a glass base material for an optical fiber. More particularly, the present invention relates to a glass base material for an optical fiber and a manufacturing method thereof, where the absorption by hydroxyl groups is reduced.

### Description of the Related Art

In communications using an optical fiber, since a low-cost semiconductor laser can be used, wavelength which is about 1300 or 1550nm is being used. As recent technology involving Wavelength Division Multiplexing (WDM) communication is being progressed, however, itisnecessarytoutilizeabroadwavelength band ranging between 1300 to 1600nm so as to increase transmission capacity.

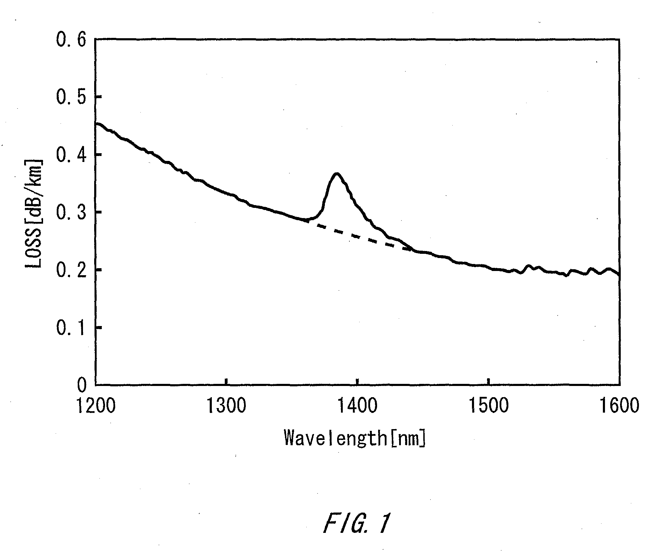

Fig. 1 shows the relation between transmission loss and wavelength in a general single-mode optical fiber. As shown in Fig. 1, the transmission loss of a general optical fiber increases significantly at about 1385nm. If the transmission loss increases, transmission using the light of about 1385nm cannot be performed, the number of channels which can be used in, e.g. CWDM (Coarse-WDM) decreases, and thereby the entire transmission capacity decreases. In order to transmit optical signals over long distance, it is inevitable to establish more relay stations to relay and amplify light, but there is a problem that the entire cost of the communication system increases.

Accordingly, it is necessary to prevent the transmission loss from significantly increasing at about 1385nmin wavelength. The significant increase of the transmission loss at about 1385nm in wavelength is due to the absorption by hydroxyl groups contained in the optical fiber, where the increase occurs because hydroxyl groups vibrate and absorb light. In order to lower the absorption peak causedby the hydroxyl groups, it is necessary to reduce the amount of hydroxyl groups at the stage of a glass base material that is a base material of an optical fiber.

Further, the peak value of the absorption by hydroxyl groups can be obtained from the difference between the peak value of the transmission loss at about 1385nm in wavelength in Fig. 1 and the value of the transmission loss at about 1385nm in wavelength with regard to the graph shown as a dotted line when the transmission loss decreases gently. Furthermore, the peak value of the absorption by hydroxyl groups in Fig. 1 is approximately 0.1dB/km.

A method for providing a glass base material for a single-mode optical fiber where hydroxyl groups are reduced is exemplified by Japanese Patent No. 3301602 using an over-jacketing method. In this method, during the drawing process to adjust the diameter of a glass rod including a core, hydroxyl groups are reduced by using plasma flame so as not to contaminate the glass rod with hydroxyl groups or eliminating the contaminated layer after drawing the rod with flame.

In a general process of manufacturing a glass base material for an optical fiber, however, the method using plasma flame is not common, and rather a method by oxyhydrogen flame is being adopted widely. Aprocess of eliminating the contaminated layer due to hydroxyl groups, though it is necessary when a drawing method by oxyhydrogen flame is adopted, is not necessary in manufacturing a general single-mode optical fiber, and thus the cost increases.

Further, a method of jacketing a hollow cylindrical tube has been generally known. In such method glass particles are deposited directly over a glass rod including a core, and then dehydrated and converted into transparent glass. In contrast to the OVD method or the VAD (Vapor-phase Axial Deposition) method, the cost is high. The reason is that shaping treatment or surface treatment is inevitable after the hollow cylindrical tube itself is manufactured by the OVD or VAD method.

### SUMMARY OF THE INVENTION

Therefore, it is an object of the present invention to provide a glass base material for an optical fiber and a manufacturing method thereof at low cost where hydroxyl groups are small so that the absorption due to them is reduced, which is capable of overcoming the above drawbacks accompanying the conventional art. The above and other objects can be achieved by combinations described in the independent claims. The dependent claims define further advantageous and exemplary combinations of the present invention.

According to the first aspect of the present invention, a method for manufacturing a glass base material for an optical fiber by forming a core rod having a core section and a portion of a clad, forming an additional clad by depositing glass particles on circumference of the core rod, and performing a sintering and vitrifying process on an obtained porous base material, includes the step of forming the core rod in order that the relation 3.75 ≤ a/m ≤ 6 is satisfied, where 'a' denotes an outer diameter of a section corresponding to the core rod, and 'm' denotes a mode field diameter at 1385nm in wavelength with regard to the optical fiber obtained by drawing the glass base material.

The core rod may be manufactured by using one of methods which are VAD, OVD, MCVD and PCVD. The average concentration of hydroxyl groups may be 1ppb or less in a section of the core rod equivalent to at least 90% of an outer diameter thereof. The average concentration of hydroxyl groups may be 50ppm or less in a section of the additional clad equivalent to at least 150% of an inner diameter thereof.

According to the second aspect of the present invention, a glass base material for an optical fiber is manufactured by the above method.

According to the third aspect of the present invention, an optical fiber is obtained by heating and drawing the above glass base material. A contribution portion of absorption loss caused by hydroxyl groups may be 0.04dB/km or less with regard to a transmission loss spectrum of the optical fiber at about 1385nm in wavelength.

The summary of the invention does not necessarily describe all necessary features of the present invention. The present invention may also be a sub-combination of the features described above. The above and other features and advantages of the present invention will become more apparent from the following description of the embodiments taken in conjunction with the accompanying drawings.

### BRIEF DESCRIPTION OF THE DRAWINGS

Fig. 1 shows the relation between transmission loss and wavelength in a general single-mode optical fiber.
Fig. 2 is a cross-sectional view of an optical fiber of the present invention.
Fig. 3 shows an example of processes of manufacturing a glass base material for an optical fiber of the present invention.
Fig. 4 shows a graph indicating the relation the magnitude of OH absorption peak and a/m.
Fig. 5 shows a graph indicating transmission loss characteristics of an optical fiber of the present invention.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

According to an exemplary embodiment of the present invention, a method for manufacturing a glass base material for an optical fiber where transmission loss at 1385nm in wavelength caused by hydroxyl groups inside the optical fiber is reduced, includes the steps of forming a core rod, further forming an additional clad on the circumference of the core rod in order that the following relation is satisfied: 3.75≤a/m≤6, where 'a' denotes the outer diameter of a section corresponding to the core rod, and 'm' denotes the mode field diameter at 1385nm in wavelength with regard to the optical fiber obtained by drawing theglassbasematerial, andperformingasinteringandvitrifying process.

A glass base material for an optical fiber of the presentinventionismanufacturedinordertosatisfytherelation 3.75 ≤ a/m ≤ 6 by the steps of, e.g. preparing a core rod including a core section and a clad section, heating and drawing the core rod with flame to have a predetermined diameter, forming an additional clad by depositing glass particles produced by flame hydrolysis of a glass raw material on the circumference of the drawn core rod, dehydrating the porous base material in an atmosphere containing chloride at 900 to 1250°C, and performing a vitrifying process in an atmosphere mainly of helium at 1400°C or more. The optical fiber can be obtained by drawing the glass base material.

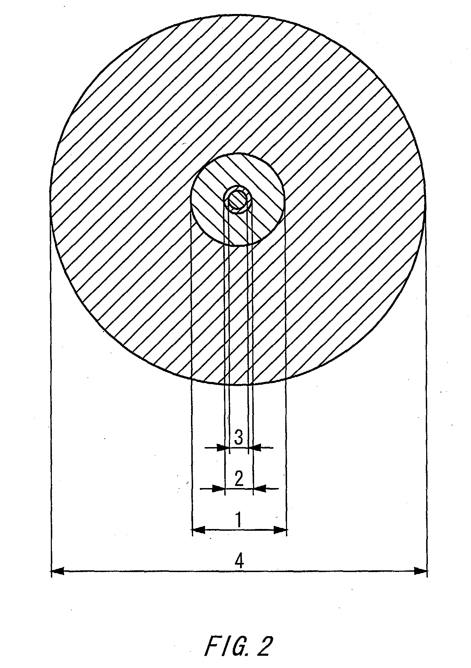

Fig. 2 is a cross-sectional view of an optical fiber obtained by drawing a glass base material of the present invention.

There is a core inside a section 1 corresponding to the core rod consisting of the core section and a portion of a clad, and a mode field diameter 2 at 1385nm in wavelength is larger than a core diameter 3. Optical power exits even in an area outside the mode field diameter 2, and decreases outwards exponentially. Although near the surface of the section 1 corresponding to the core rod hydroxyl groups caused by drawing the core rod with flame exist at a few to a few tens of ppm in density, since this area is distanced enough from the mode field diameter 2, the absorption peak by hydroxyl groups can be controlled, and the contaminated layer due to hydroxyl groups does not need to be eliminated. Further, the symbol 4 represents the diameter of the optical fiber.

The core rod is manufactured by one of the methods such as VAD, OVD, MCVD, PCVD, etc. Among them, it is the VAD method that is easy to reduce especially the content of hydroxyl groups, because no holes exist from the beginning of manufacturing a center section of the core rod until finishing the process. Since in all of the methods there exist holes in the center section of the core rod, it is necessary to be careful about reducing the content of hydroxyl groups.

In addition, although the average concentration of hydroxyl groups of the core rod is 1ppb or less in a portion equivalent to at least 90% of the outer diameter of the core rod, this concentration can be achieved relatively easily by manufacturing a porous base material for the core rod using the VAD method and performing a dehydrating process carefully on the obtained porous base material.

Further, an additional clad is added to the core rod, and the average concentration of hydroxyl groups of the additional clad is 50ppm or less in a portion equivalent to at least 150% of the inner diameter of the additional clad. That can be achieved easily by using the method described above of performing a dehydrating and vitrifying process after depositing glass particles on the circumference of the core rod.

Hereinafter, although the present invention will be described by way of exemplary embodiments, it should be understood that those skilled in the art might make many changes and substitutions without departing from the spirit and the scope of the present invention which is defined only by the appended claims.

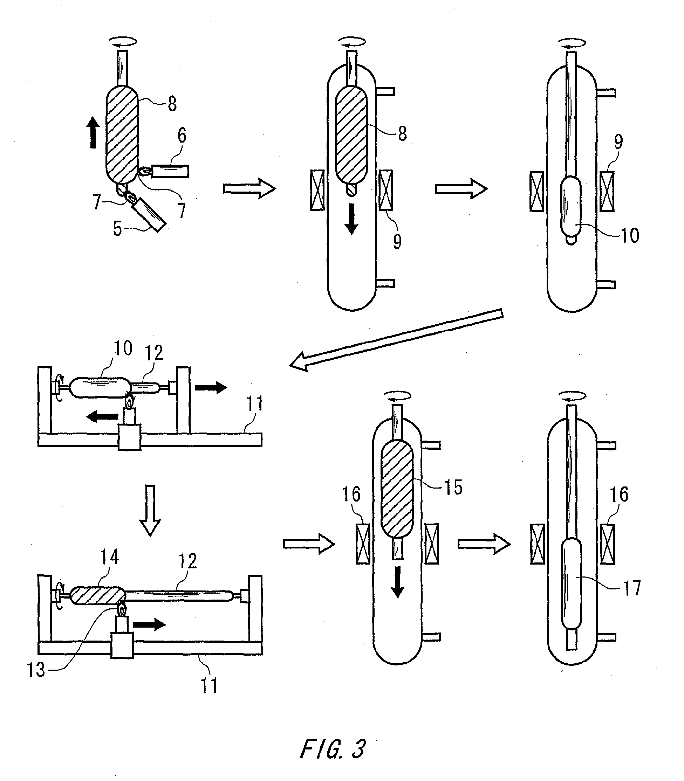

Fig. 3 shows an example of processes of manufacturing a glass base material for an optical fiber where the content of hydroxyl groups is small according to the present invention, in case of manufacturing a core rod by the VAD method.

Burners 5 and 6 for core and clad respectively are supplied with glass raw materials as well as oxygen and hydrogen so as to form a glass particle flow 7, and then a porous base material 8 for a core rod is manufactured. Further, into the burner 5 for core a dopent for adjusting the index of refraction is introduced at the same time so as to form a section whose index of refraction is high.

At this time, the outer diameter and the core diameter of the core rod obtained by dehydrating and vitrifying the porous base material 8 are controlled in order that the ratio of the outer diameter a of the section corresponding to the core rod to the mode field diameter m at 1385nm in wavelength satisfies the following relation: 3.75 ≤ a/m ≤ 6, with regard to an optical fiber to be obtained by drawing the glass base material.

Although only one burner 6 for clad is shown in Fig. 3, two or more burners may be used for the necessary volume of the clad. With regard to the burner 5 for core, two or more burners can be used for a complicated profile such as a stair or segment type other than a general step index type.

The porous base material 8 obtained in such way is passed through a furnace 9 to be dehydrated in an atmosphere containing chloride at 900 to 1250°C, and thereby hydroxyl groups inside the porous base material 8 are eliminated. A transparent core rod 10 can be obtained through a vitrifying process of heating the dehydrated porous base material in an atmosphere mainly of helium at 1400°C or more. Those dehydrating and vitrifying processes can be performed simultaneously in an atmosphere containing chloride mainly of helium at 1400°C or more.

The core rod 10 is mounted on a lathe 11 to draw it being heated with flame so that its diameter can be a predetermined level, and thereby a core rod 12 can be obtained, whose outer diameter has been adjusted.

Then, on the circumference of this core rod 12 a glass particle flow 13 produced by flame hydrolysis of a glass raw material is blown to deposit a porous glass layer 14. Those processes are repeated until the clad of necessary volume is deposited, and thereby a porous base material 15 for an optical fiber can be obtained.

The obtained porous base material 15 is passed through a furnace 16 to be dehydrated in an atmosphere containing chloride at 900 to 1250°C, and hydroxyl groups inside the porous base material are eliminated. A transparent glass base material 17 for an optical fiber can be obtained through a vitrifying process of heating the dehydrated porous base material 15 in an atmosphere mainly of helium at 1400°C or more. Those dehydrating and vitrifying processes can be performed simultaneously in an atmosphere containing chloride mainly of helium at 1400°C or more.

By drawing the glass base material using a general drawing apparatus, an optical fiber can be obtained, whose absorption peak by hydroxyl groups at about 1385nm in wavelength is small.

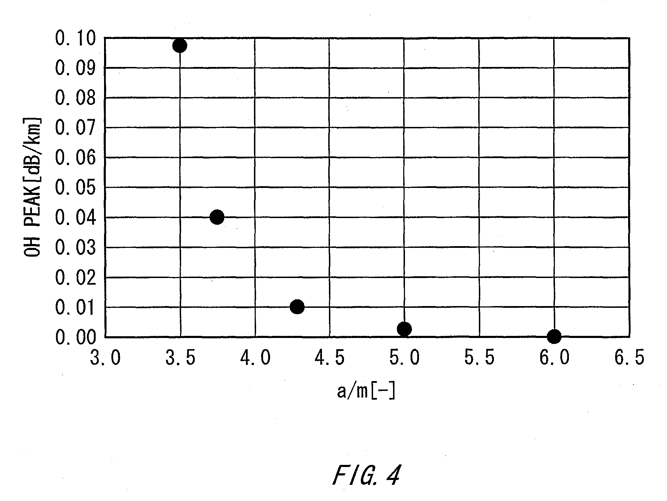

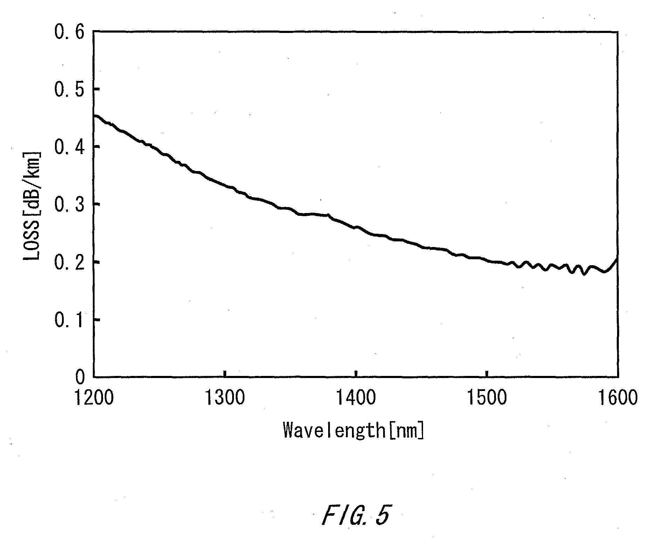

Using the method above, five step index type single-mode fibers were manufactured, whose outer diameters are 125µm, mode field diameters at 1385nm in wavelength are 9.6µm, and outer diameters of sections corresponding to the core rods inside the optical fibers are different from each other, and the result of evaluation of the transmission loss thereof is shown in Table 1 and Fig. 4, while the transmission loss spectrum of Fiber ID No. 3 is shown Fig. 5.

**[Table 1]**

| Fiber ID No. | Outer diameter a (µm) of section corresponding to core rod inside optical fiber | Mode field diameter m (µm) at 1385nm in wavelength | a/m | OH peak (dB/km) |
|---|---|---|---|---|
| 1 | 33.7 | 9.6 | 3.51 | 0.097 |
| 2 | 36.0 | 9.6 | 3.75 | 0.040 |
| 3 | 41.2 | 9.6 | 4.29 | 0.010 |
| 4 | 48.0 | 9.6 | 5.00 | 0.002 |
| 5 | 57.6 | 9.6 | 6.00 | 0.000 |

As obvious from the result above, it is necessary to make a/m ≥ 3.75 so as to control the magnitude of the absorption peak by hydroxyl groups to be 0.04dB/km or less. The magnitude of the absorption peak by hydroxyl groups reached a detection limit when a/m was 6.0. In view of the cost of manufacture, since the process of adding a clad is less expensive than the process of manufacturing a core, it is preferable that a/m is small, and since in terms of cost versus effect it is inefficient that a/m>6, the preferable range is that 3.75 ≤ a/m ≤ 6.

As obvious from the description above, according to the present invention, it is possible to manufacture an optical fiber whose absorption peak by hydroxyl groups is small, at low cost with simple processes without any process of eliminating the contaminated layer.

## Claims

1. A method for manufacturing a glass base material for an optical fiber by forming a core rod having a core section and a portion of a clad, forming an additional clad through depositing glass particles on circumference of said core rod, and performing a sintering and vitrifying process on an obtained porous base material, comprising the step of:
forming said core rod in order that a relation 3.75≤a/m≤6 is satisfied, where 'a' denotes an outer diameter of a section corresponding to said core rod, and 'm' denotes a mode field diameter at 1385nm in wavelength with regard to said optical fiber obtained by drawing said glass base material.

2. A method for manufacturing a glass base material for an optical fiber as claimed in claim 1, wherein said core rod is manufactured by using one of methods which are VAD, OVD, MCVD and PCVD.

3. A method for manufacturing a glass base material for an optical fiber as claimed in claim 1 or 2, wherein average concentration of hydroxyl groups is 1ppb or less in a section of said core rod equivalent to at least 90% of an outer diameter thereof.

4. A method for manufacturing a glass base material for an optical fiber as claimed in any one of claims 1, 2 or 3, wherein average concentration of hydroxyl groups is 50ppm or less in a section of said additional clad equivalent to at least 150% of an inner diameter thereof.

5. A glass base material for an optical fiber manufactured by said method as claimed in claim 1.

6. An optical fiber obtained by heating and drawing said glass base material as claimed in claim 5.

7. An optical fiber as claimed in claim 6, wherein a contributionportion of absorption loss causedbyhydroxyl groups is 0.04dB/km or less with regard to a transmission loss spectrum of said optical fiber at about 1385nm in wavelength.
